Europäisches Patentamt

European Patent Office

Office européen des brevets

(19)

(11) Numéro de publication: **0 000 451**

**B1**

(12) **FASCICULE DE BREVET EUROPEEN**

(21) Numéro de dépôt: **7840022.6**

(22) Date de dépôt: **16.06.78**

(51) Int. Cl.³: **B 07 C 3/08,. B 65 G 47/61**

(54) Pince de maintien d'objet, système d'accrochage, de décrochage et de tuilage d'une telle pince, et installation de manutention mettant en oeuvre cette pince et ces systèmes

(30) Priorité: **28.06.77 FR 7719823**

(43) Date de publication de la demande:
**24.01.79 Bulletin 79/02**

(45) Mention de la délivrance du brevet:
**20.08.80 Bulletin 80/17**

(84) Etats contractants désignés:
**DE GB SE**

(56) Documents cités:
**DE - B - 1 218 774**
**DE - B - 1 251 236**
**FR - A - 1 215 721**
**FR - A - 1 289 882**
**FR - A - 1 485 409**
**US - A - 3 709 404**

(73) Titulaire: **Hotchkiss-Brandt Sogeme H.B.S.**
**186 rue du Faubourg St Honoré**
**F - 75008 Paris (FR)**

(72) Inventeur: **de Rancourt de Mimerand, Yvan**
**"Thomson-CSF" - SCPI**
**173, boulevard Haussmann**
**F - 75360 Paris Cedex 08 (FR)**
**Goullet, Jean**
**"Thomson-CSF" - SCPI**
**173, boulevard Haussmann**
**F - 75360 Paris Cedex 08 (FR)**

(74) Mandataire: **Pierre, Michel**
**"Thomson-CSF" - SCPI**
**173, boulevard Haussmann**
**F - 75360 Paris Cedex 08 (FR)**

Courier Press, Leamington Spa, England.

## Pince de maintien d'objet, système d'accrochage, de décrochage et de tuilage d'une telle pince, et installation de manutention mettant en oeuvre cette pince et ces systèmes

L'invention concerne une pince de maintien d'objet. Elle concerne également un système d'accrochage, de décrochage et de tuilage d'une telle pince ainsi que toutes installations de manutention mettant en oeuvre ces dispositifs et ces systèmes.

Il existe sur le marché des pinces qui sont des dispositifs auxquels sont accrochés des objets soit directement soit préalablement disposés dans un emballage. Elles assurent la liaison entre ces objets et un support le plus souvent une broche. Les dispositifs de ce type se retrouvent par exemple dans les présentoirs de produits de grande consommation; étant le plus souvent utilisés de manière statique leur conception ne pose guère de problème.

Il est connu de transporter dans une chaîne de manutention telle que décrite dans le brevet allemand No. 1 251 236, des pochettes comportant un évidement se présentant de préférence sous la forme d'un trou allongé (pour un meilleur guidage) dans lequel pénètre une tige d'entraînement liée à la chaîne de transport. Celle-ci est le plus souvent une chaîne sans fin qui comporte une pluralité de ces tiges.

La présente invention se propose de résoudre un certain nombre de problèmes se situant au niveau du transport des objets par l'intermédiaire de pinces coopérant avec un système d'accrochage, de décrochage "à la volée" et de tuilage liés à la chaîne de manutention. Si l'on veut introduire l'utilisation de pinces dans une chaîne de manutention celles-ci doivent répondre à un certain nombre d'exigences. Elles doivent pouvoir être stockées facilement, prélevées au niveau des supports de stockage souvent fixes pour être placées sur des moyens de transfert mobiles puis à nouveau décrochées et ainsi de suite. Comme cela sera expliqué ultérieurement, elles risquent, durant le transfert, de subir au moins une opération de tuilage.

Il s'agit là de problèmes difficiles que la présente invention se propose de résoudre. Elle concerne plus particulièrement une pince de maintien d'objet constituant un élément assurant la liaison entre cet objet et un support et comportant une ouverture à travers laquelle le support est introduit, caractérisée en ce que cette ouverture se termine par une fente débouchant sur la périphérie de la pince, et présente un profil délimitant d'une part, une surface de grandeur croissante depuis la fente jusqu'à la base (AB) de l'ouverture, autorisant ainsi l'introduction "à la volée" du support, conduisant d'autre part à une configuration des parois de cette ouverture favorable au glissement de ce support après son introduction et jusqu'à ce qu'un état d'équilibre s'établisse; cette pince étant réalisée en un matériau présentant une élasticité capable de créer un effet de ressort tendant à ramener dans un même plan les deux parties ($P_1$ et $P_2$) de la pince, situées de part et d'autre de la fente quelles que soient les contraintes auxquelles elles sont soumises et présentant, aussi, un coefficient de frottement accentuant le glissement du support après son introduction.

L'invention sera mieux comprise à l'aide des explications qui vont suivre et des figures jointes parmi lesquelles:

— les figures 1 et 2 représentent respectivement, vue de face et de côté une pince conforme à l'invention;

— les figures 3 et 4 représentent une telle pince munie de bossages;

— la figure 5 et la figure 6 qui est une coupe selon $FF_1$ de la figure 5 montrent une disposition d'une pince selon l'invention, enfilée sur une broche de stockage:

— les figures 7 et 8 montrent un exemple de réalisation d'un système d'accrochage de pinces selon l'invention, munies de bossages;

— la figure 9 représente une variante de réalisation d'un répartiteur unitaire adapté aux pinces sans bossages;

— les figures 10, 11 et 12 illustrent le fonctionnement du dispositif de la figure 9;

— les figures 13, 14 et 15 montrent une variante de réalisation d'un dispositif d'accrochage proprement dit adapté aux pinces munies de bossages;

— la figure 16 montre une variante de réalisation d'un dispositif d'accrochage proprement dit adapté aux pinces sans bossages;

— les figures 17, 18 et 19 illustrent un dispositif de décrochage d'une pince selon l'invention;

— les figures 20, 21 et 22 montrent un système de tuilage pour pinces conformes à l'invention.

Pour faciliter la compréhension, les mêmes éléments portent les mêmes références dans toutes les figures.

Comme cela a déjà été dit précédemment, une pince conforme à l'invention sert de liaison entre un ou plusieurs objets et un moyen de stockage ou de transfert dit "support". Il peut s'agir d'objets quelconques (enveloppes, emballages, cartons, fiches etc...). Ces objets sont attachés à la pince par tout moyen connu tandis qu'une ouverture pratiquée dans la pince permet d'y introduire le support.

Conformément à la présente invention une telle pince est essentiellement caractérisée par la combinaison qui est faite du choix du matériau dans lequel elle est réalisée coopérant avec la configuration particulière qui lui est donnée pour permettre son décrochage, son accrochage et éventuellement le tuilage de plusieurs pinces, ces opérations pouvant être effectuées dans les conditions les plus difficiles, à savoir dans les cas où elles doivent être réalisées automatiquement et à la volée.

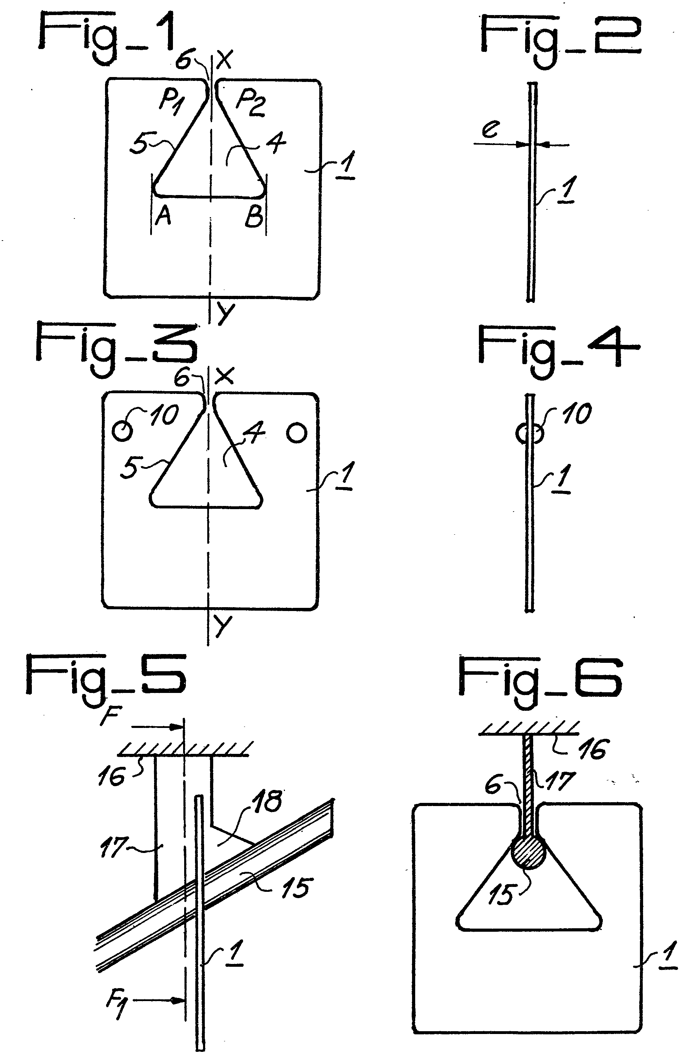

Une telle pince 1 selon l'invention est représentée vue de face sur la figure 1 et vue de côté sur la figure 2. Il s'agit d'une pince 1 dont l'épaisseur est (e) (visible sur la figure 2) et dont la section, vue de face telle que représentée sur la figure 1 est sensiblement carrée, mais en fait elle pourrait aussi être quelconque.

Conformément à l'invention, une ouverture 4 est réalisée dans toute l'épaisseur de la pince selon un profil 5 libérant une fente 6 ouverte de préférence sur le milieu du côté supérieur de la pince débouchant sur la périphérie de celle-ci. Le profil de cette ouverture est très important: en effet il doit contribuer à l'accomplissement d'au moins deux fonctions essentielles. D'une part, il doit délimiter une ouverture suffisamment grande pour permettre à un moyen de stockage ou de transfert dit "support" d'y pénétrer facilement même si la pince et ce support sont animés d'un mouvement relatif important l'un par rapport à l'autre (opération effectuée à la volée). D'autre part, il doit conduire à une configuration de parois facilitant le glissement de la pince sur son support jusqu'à ce qu'un état d'équilibre s'établisse. Un profil évolutif délimitant une surface croissante de la fente jusqu'à la base AB de l'ouverture remplit cette condition; c'est pourquoi d'ailleurs le profil triangulaire représenté sur la figure 1, pour cette ouverture 4, est plus particulièrement adapté pour l'accomplissement de ces deux fonctions. En effet la base AB du triangle peut être choisie en fonction de l'application considérée et assurer ainsi les conditions nécessaires à l'accomplissement de la première fonction (pénétration du support à la volée). Il est tenu compte dans chaque cas des dimensions du support.

Les côtés du triangle constituant les parois de l'ouverture présentent une fente également adaptable à l'application considérée et capable de favoriser le glissement dont il a été question précédemment. Le sommet du triangle coïncide avec la fente 6 dont la section présente une surface inférieure à celle du support. Elle délimite deux parties $P_1$ et $P_2$ situées de part et d'autre d'un plan passant, par exemple, par l'axe XY de la fente. Compte tenu de sa présence les deux parties peuvent être décalées par rapport à ce plan dans un sens inverse l'une de l'autre, libérant ainsi un espace libre qui facilite le décrochage de la pince. Néanmoins pour que cela se réalise correctement et, c'est là qu'intervient la nature du matériau, il faut que celui-ci présente, tout d'abord un coëfficient d'élasticité suffisamment élevé pour que, compte tenu de l'épaisseur (e) de la pince, la déformation ne soit pas permanente, la pince par effet de ressort retrouvant alors automatiquement sa forme initiale à la fin de l'opération de décrochage, quelles que soient les contraintes auxquelles les parties $P_1$ et $P_2$ ont été soumises. Mais il faut également que ce matériau présente aussi un coëfficient de frottement faible pour ne pas s'opposer au glissement de la pince mais au contraire l'accentuer encore. Il existe sur le marché des matières plastiques remplissant ces conditions, faciles à mettre en oeuvre par injection, découpage ou moulage. La fente joue un autre rôle important qui sera expliqué ultérieurement.

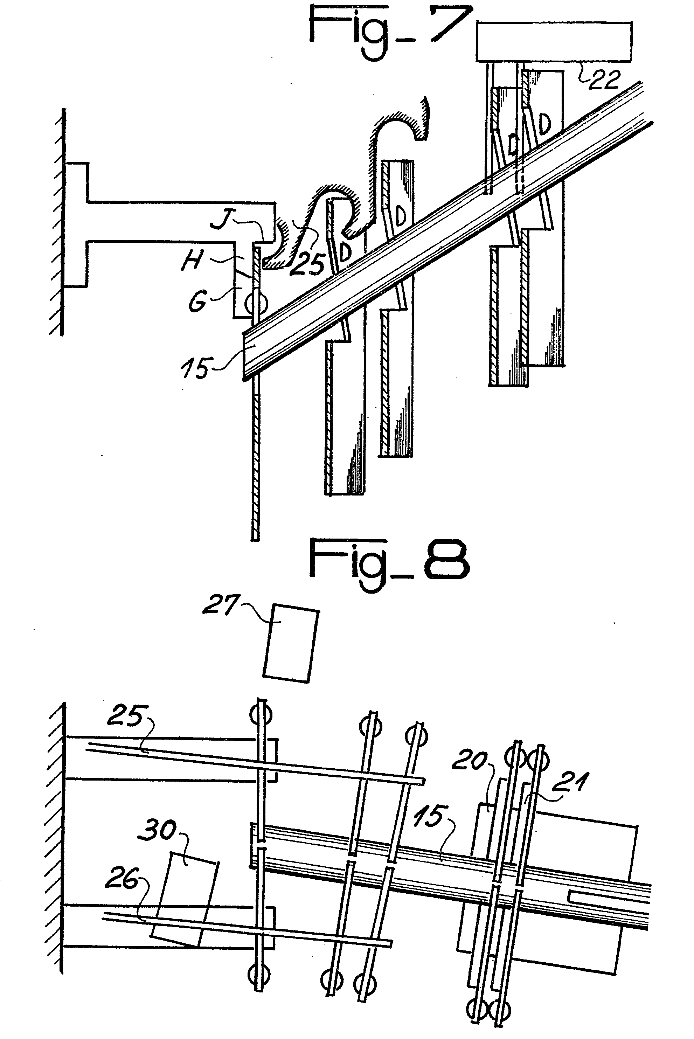

La figure 3, vue de face, et la figure 4 vue de côté, représentent une variante de réalisation d'une pince conforme à l'invention telle que décrite au moyen des figures 1 et 2. Dans ce cas, celle-ci, outre les moyens définis précédemment (matériau, profil de l'ouverture et fente), comporte des bossages tels 10 capables de servir d'entretoi—ses dans les cas où une succession de pinces est utilisée et où une distance déterminée doit être respectée entre chaque pince.

La figure 5 et la figure 6 est une coupe selon $FF_1$ de la figure 5 montrent une disposition d'une pince 1 enfilée dans un support qui est par exemple une broche, 15 servant de moyen de stockage ou de maintien durant les opérations de transfert. Ces figures illustrent une autre fonction importante de la fente 6. En effet, dans de nombreuses applications les broches 15 destinées à supporter un grand nombre de pinces 1 doivent être correctement soutenues par un bâtis rigide 16. Pour cela un organe de soutien 17 pour la broche 16 d'épaisseur compatible avec la fente 6 de la pince assure la liaison entre le bâtis et la broche, sans gêner l'embrochage de la pince. Il peut présenter une partie en forme d'étrave 18 qui assure alors, en coopération avec la fente 6, un centrage correct de la pince 1.

Comme cela a été dit précédemment les applications des pinces conformes à l'invention sont nombreuses. Elles peuvent, en particulier servir à transférer les objets munis de leur pince, d'un premier support fixe tel qu'une broche de stockage sur tout autres moyens destinés à les supporter, par exemple sur un second support mobile qui est un têton d'entraînement d'un système de transfert animé d'une certaine vitesse, sans qu'il y ait arrêt du transfert. Les figures 7 et 8 montrent un exemple de réalisation d'un système d'accrochage de pinces conformes à l'invention et plus particulièrement de pinces à bossages telles que décrites au moyen des figures 3 et 4. Un tel système comprend un répartiteur unitaire coopérant avec le dispositif d'accrochage proprement dit.

Le répartiteur reçoit les pinces, les unes derrière les autres sur une broche inclinée 15, et la première pince vient en butée sur la seconde guillotine 20, la première guillotine 21 étant relevée.

La première guillotine 21 s'abaisse, entre la première et la seconde pince qui la suit et retient la seconde pince pendant que la première pince est libérée par le relèvement de la seconde guillotine 20.

Ces deux guillotines sont liées par un système à leviers, lui-même commandé par un électro-aimant 22.

Le mouvement alternatif des deux guillotines assure la répartition unitaire des pinces, au moment désiré.

Le dispositif d'accrochage "à la volée" proprement dit qui reçoit à partir de la broche 15, les pinces une à une, est constitué par deux roues à rochets 25 et 26 (roue dentée) dans un exemple de réalisation donné ici à titre nullement limitatif, sur lesquels les pinces viennent buter pour ensuite être entraînées par lesdites roues. Il s'agit d'un organe de poussée des pinces vers un jeu de butées comme cela est expliqué plus clairement ci-dessous. Celles-ci sont de diamètres différents, ont le même nombre de dents et sont calées sur un même axe incliné par rapport à la trajectoire des têtons destinés à recevoir les pinces et aussi par rapport à l'axe de la broche. Elles sont entraînées par un moteur "pas à pas" ou tout autre système à rochet et indexation. Le profil des dents est particulier en ce qu'il convient à la réception unitaire des pinces et par conséquent des objets, et conformément à l'invention, à leur poussée en appui sur des butées (H et G) qui forment avec l'axe de la broche un angle inférieur à 90°. Il en résulte une position inclinée des pinces qui est indispensable à la fonction "accrochage à la volée" des pinces sur les supports mobiles tel que le têton 30 qui peut ainsi pénétrer dans l'orifice triangulaire de la pince et entraîner celle-ci.

Le maintien en position sensiblement verticale des pinces pendant la durée de l'accrochage est obtenu par le moyen d'une butée (J) qui limite la rotation de la pince dans un plan vertical, ce qui a pour effet d'éviter un fort balancement de la pince juste après son transvert sur le têton concerné.

L'accrochage se fait de la manière suivante: le têton 30 ayant pénétré dans l'orifice triangulaire de la pince fait légèrement tourner celle-ci autour de la broche jusqu'à ce que la butée (J) stoppe certe rotation. Le têton poursuivant sa course provoque un décalage des bords de la fente de la pince qui échappe à la fois à l'extrémité de la broche (15) et à la butée (H), plus courte que la butée (G).

La pince reprend, par son élasticité, sa forme primitive (bords de la fente, l'un en face de l'autre) et se trouve suspendue sur le têton d'entraînement 30.

La trajectoire du système de transfert ou de manutention est perpendiculaire à l'axe de la broche 15.

Les commandes du répartiteur et du dispositif d'accrochage, déjà synchronisées, doivent également l'être avec le passage d'un têton libre, de manière à que chaque pince soit déjà en appui sur ses butées (H et G) avant que ce têton libre, ne pénètre dans l'orifice triangulaire de la pince à accrocher.

Un organe de commande logique, par exemple, peut être prévu pour interdire l'approche d'une pince sur ses butées (H et G) tant qu'un têton libre n'est pas annoncé par un détecteur de proximité. L'accrochage dans ces conditions est donc automatique. Ces moyens de positionnement du têton ne sont pas figurés sur les figures 7 et 8.

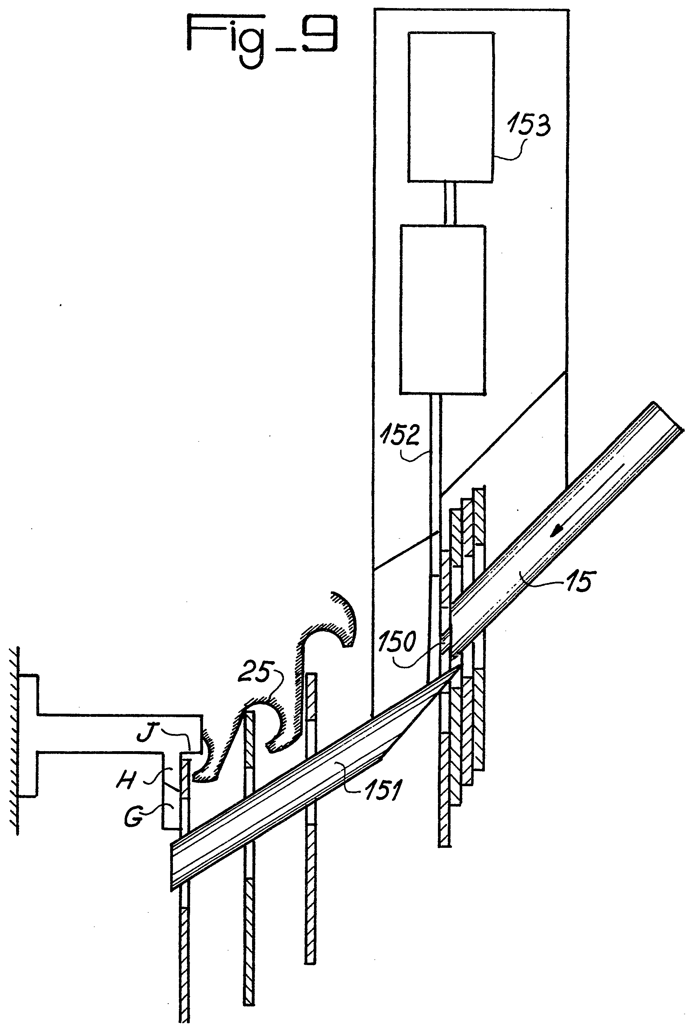

Si l'on utilise des pinces sans bossages telles que décrites au moyen des figures 1 et 2, le même résultat sera obtenu avec le même dispositif d'accrochage à la volée fonctionnant à l'aide d'un organe de poussée constitué, comme dans l'exemple précédent, de deux roues à rochets, à condition qu'il coopère avec un répartiteur unitaire adapté aux pinces sans bossages. Un exemple de réalisation d'un tel répartiteur est représenté sur la figure 9 tandis que les figures 10, 11 et 12 illustrent les différentes phases de fonctionnement de ce répartiteur. Il comprend une broche 15 de stockage très inclinée, terminée par une seconde broche 150 de plus petit diamètre et de longueur comprise entre une et deux épaisseurs de pince et de même inclinaison, enfin à une troisième broche 151 moins inclinée, placée immédiatement sous les 2 autres, de manière à permettre le passage successif, de chaque pince, sur les trois étages de broches. La fonction répartition unitaire est assurée par le déplacement alternatif et rapide du volet mobile 152 actionné par exemple par un électro-aimant 153. Le cheminement des pinces sur les trois broches est illustré au moyen des figures 10, 11 et 12. Le dispositif d'accrochage proprement dit est identique à celui qui a été décrit au moyen des figures 7 et 8.

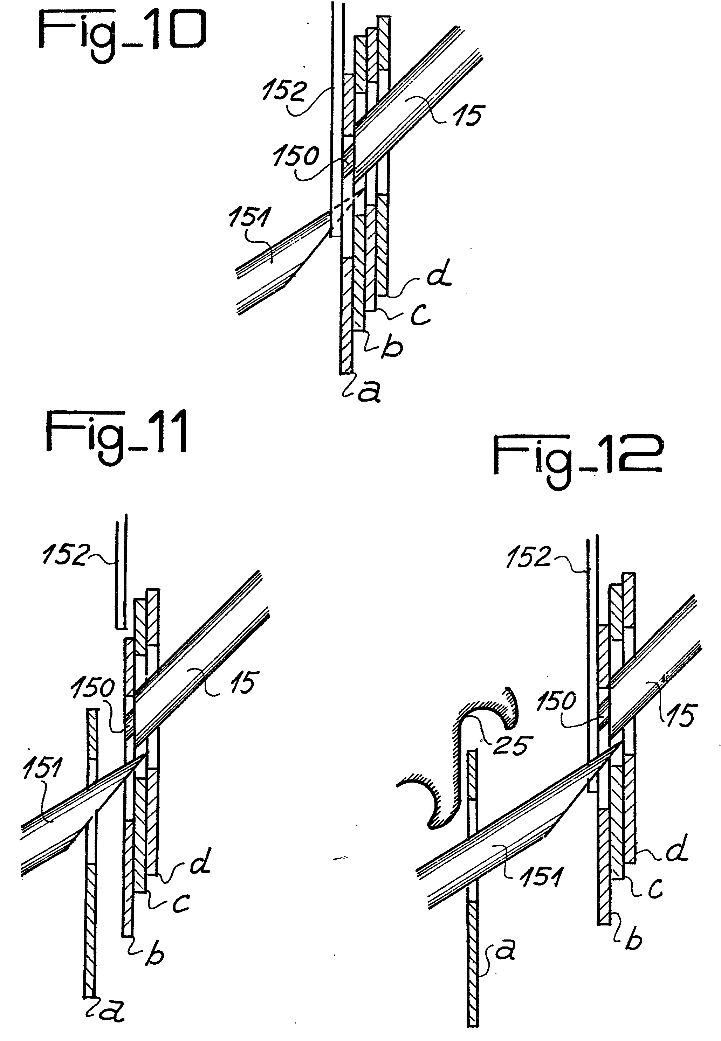

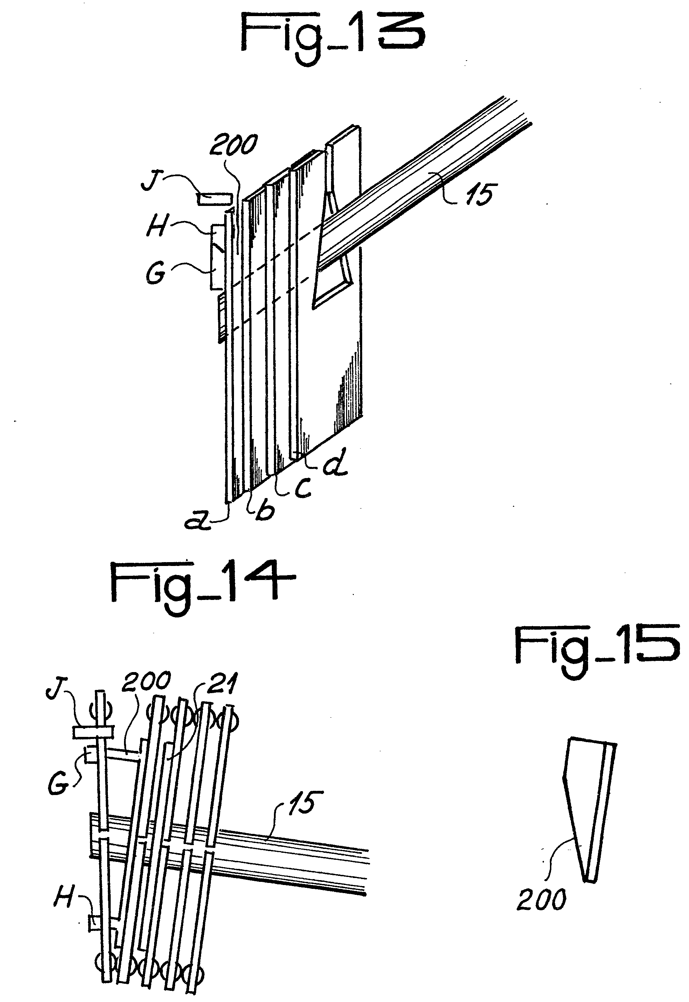

Comme le montre la figure 10 une succession de pinces (a), (b), (c), (d) sont stockées sur la broche de stockage 15. Le volet 152 est en position basse. La pince (a), en attente sur la petite broche 150 est retenue dans un premier temps par le volet 152. Les pinces (b), (c) et (d) sont retenues par la pince (a). Durant l'étape suivante illustrée par la figure 11, le volet est actionné et déplacé en position haute. La pince (a) est libérée, tandis que la pince (b) descend sur la petite broche 150. Le volet 152 est alors remis rapidement en position basse. Comme le montre la figure 12, la pince (a) est alors prise en charge par le dispositif d'accrochage du type de celui qui a été décrit au moyen des figures 7 et 8 et qui est symbolisé sur la figure 12 par un élément d'une des roues à rochets 25.

Dans les variantes de systèmes d'accrochage décrites précédemment, les dispositifs d'accrochage faisaient appel à l'utilisation d'un organe de poussée constitué de deux roues dentées en tant que moyen assurant la poussée des pinces une à une contre le jeu de butées H et G, coopérant avec la butée J pour assurer l'accrochage correct de celles-ci.

D'autres organes de poussée peuvent être choisis pour accomplir cette fonction. Un second exemple d'un système d'accrochage de ce type est maintenant décrit au moyen des figures suivantes. Les figures 13, 14 et 15 concernent un tel système plus particulièrement adapté à l'accrochage des pinces munies de bossages. On retrouve ici encore le jeu de butées H, G et J contre lesquelles les pinces (a), (b), (c) et (d) . . . sont poussées une à une, mais cette fois au moyen d'un répartiteur dont un des éléments assure également le rôle d'organe de poussée. Il est équipé d'une première guillotine 21 et d'une seconde guillotine 200 qui, outre sa fonction de guillotine, peut assurer également la poussée de chacune des pinces contre les butées H, G et J grâce à la structure particulière qui lui est donnée et qui est représentée sur la figure 15, (section rabattue de cette guillotine 200). Elle se présente comme un double coin qui favorise la distribution unitaire et l'avance des pinces par gravité, assurant aussi une sûreté de position des pinces en appui précisément sur leurs butées H et G, condition indespensable à la fiabilité de la fonction accrochage.

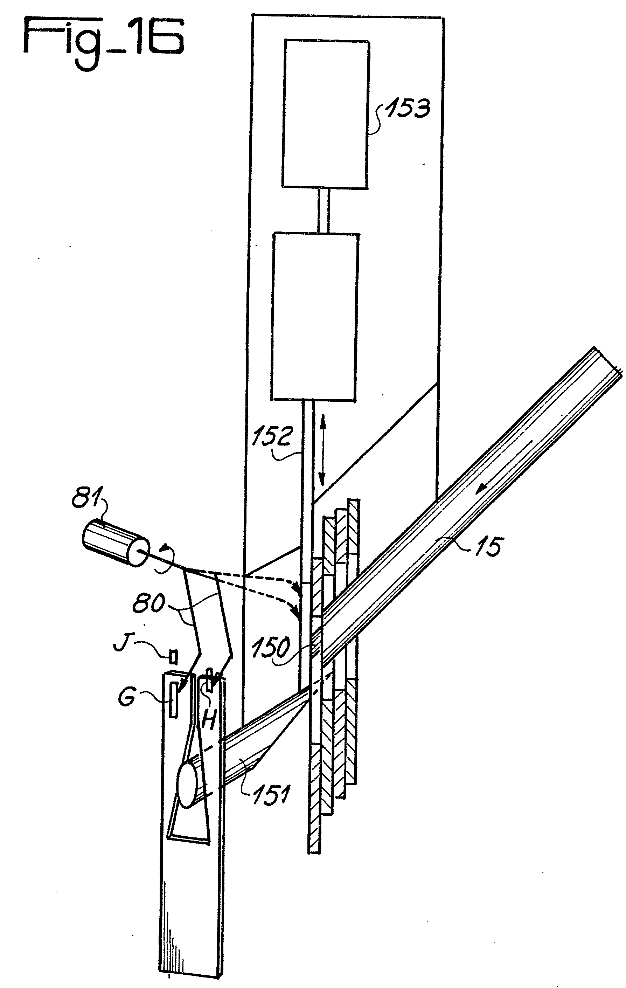

La figure 16 représente un exemple de réalisation d'un système d'accrochage sans roue dentée mais plus particulièrement adapté à l'accrochage des pinces sans bossages. Dans ce cas le répartiteur est du type de celui qui a été déjà décrit au moyen de la figure 9. Il comprend également une cascade de broches 15, 150 et 151 ainsi qu'un volet 152 actionné par un électro-aimant 153. En revanche, l'organe de poussée de la pince qui est en cours d'accrochage, contre les butées H, G et J est constitué par une fourchette rotative 80. Cette dernière est entraînée par un petit électro-aimant rotatif 81 dont les mouvements sont synchronisés avec ceux du répartiteur.

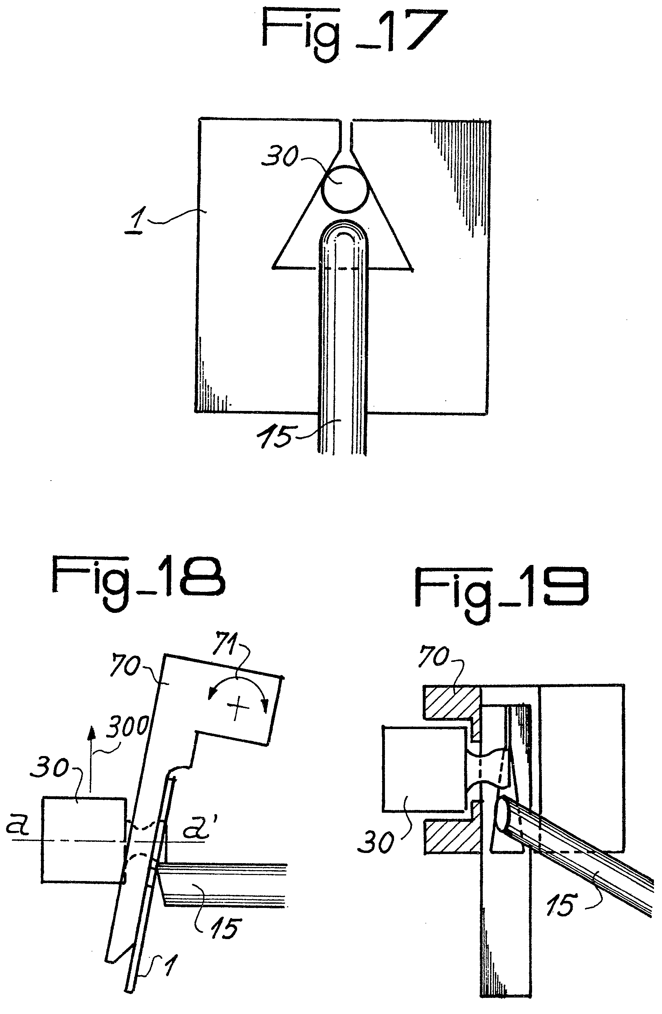

Après avoir décrit quelques exemples de réalisation d'un système d'accrochage de pinces munies ou non de bossages, un exemple de réalisation d'un système de décrochage automatique est maintenant décrit au moyen des figures 17, 18 et 19 est la coupe selon (aa')de la figure 18. Ce système a pour but de transférer automatiquement les pinces supportant les objets des têtons 30 en mouvement dans le sens donné par la flèche 300 vers une broche 15 réceptrice fixe, inclinée vers le bas. Ce résultat est obtenu au moyen d'une came 70 présentant la configuration d'une fourchette. Le profil de celle-ci est tel qu'il fait glisser les pinces sur le têton concerné, dans l'axe de celui-ci, au moment où la broche réceptrice 15 se trouve en face de l'ouverture triangulaire de la pince. Si la came est maintenue en position fixe chaque pince glisse sur une pente rectiligne de la came et au moment où la broche réceptrice 15 se trouve en face de l'ouverture triangulaire de la pince, une partie curviligne de la came 70 termine brusquement le mouvement de décrochage.

On peut augmenter la sécurité de fonctionnement en provoquant la rotation en arrière symbolisée par la double flèche 71 de la came au moment où la broche se trouve en face de l'ouverture triangulaire de la pince se trouvant en cours de décrochage.

Une pince conforme à l'invention est facile à accrocher à la volée, à décrocher automatiquement même s'il existe un mouvement relatif important entre la pièce qui la supporte et celle qui doit la recevoir, comme cela vient d'être expliqué et illustré précédement. Ces pinces peuvent également subir une opération de tuilage particulièrement utile et même nécessaire dans certaines applications faisant appel à un convoyage avec changement de direction. C'est le cas rencontré par exemple dans les machines de tri présentant des niveaux différents. Le sens de défilement des objets est inversé à chaque niveau et les moyens d'accrochage des pinces doivent se déplacer toujours dans un plan vertical. Il est donc indispensable de faire passer les pinces et les objets qu'ils portent les uns par dessus les autres pendant une rotation des moyens d'entraînement de 180°. Cette opération est définie comme étant une opération de tuilage et elle est réalisée au moyen d'un système de tuilage conforme à l'invention sans que se produise un éloignement sensible des objets.

Pour obtenir ce résultat comme le montrent les figures 20, 21 et 22 une came 90 concentrique à la trajectoire des têtons 30 et présentant un profil adapté fait pivoter les pinces (a), (b), (c) portant leur objets $(a_1)$, $(b_1)$, $(c_1)$ pendant une partie de la rotation de manière à leur imprimer une légère rotation sur le têton 30, assurant ainsi le tuilage c'est-à-dire le recouvrement les uns sur les autres des objets suspendus aux pinces.

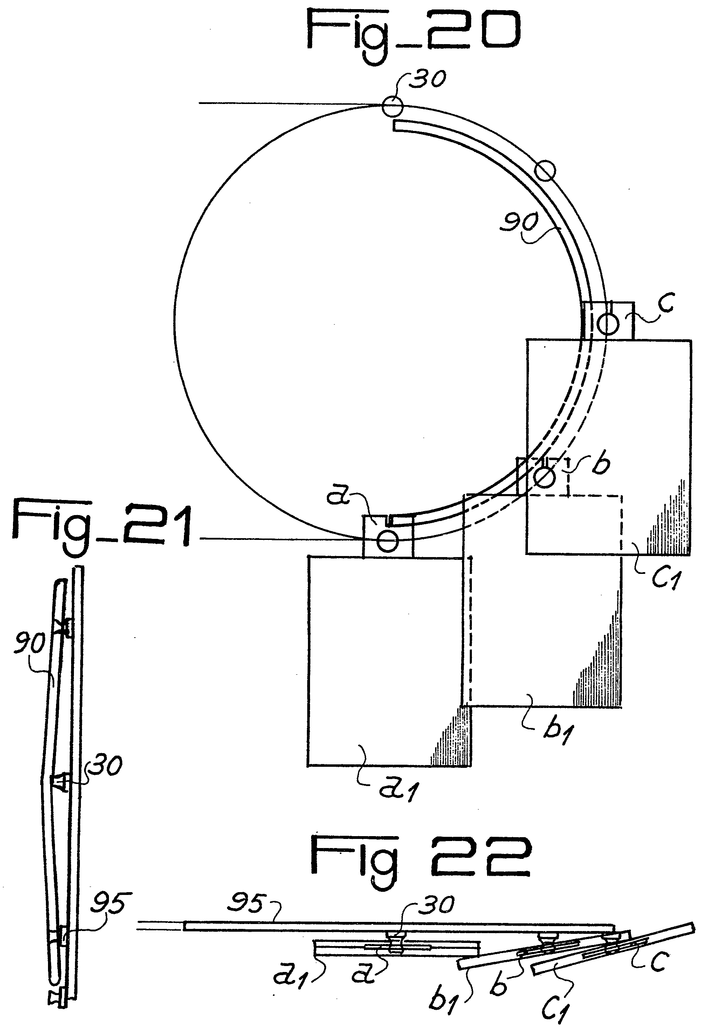

La figure 22 sur laquelle apparaît clairement le commencement de recouvrement allant en s'accentuant des pinces (a), (b), et (c) illustre cette opération. Lorsque celle-ci est terminée, et que les objets se trouvent pratiquement les uns sur les autres, la came 90 infléchit son profil pour permettre aux pinces de retrouver leur position d'équilibre. Il faut toutefois noter que cette opération est d'autant plus facile à réaliser que les objets sont plus plats.

Le passage d'un niveau supérieur à un niveau inférieur se fait de la même manière avec une came à profil symétrique.

Une pince conforme à l'invention, comme cela a déjà été dit précédemment est destinée à porter toute sorte d'objets tels que des enveloppes, des pochettes, des fiches qui sont rendus solidaires se la pince soit par ressorts, collage, agrafage, pinçage ou d'ailleurs tout autres moyens convenant aux diverses formes d'emballage. Etant donné les caractéristiques de ces pinces, grâce à des systèmes de décrochage, d'accrochange et de tuilage adaptés il devient possible de les utiliser dans de nombreuses chaînes de manutention, et de tri d'objets. Dans ce cas les pinces portant leurs objets, stockés sur une broche fixe, sont prélevées une à une par un dispositif de transfert constitué d'une chaîne munie de supports (têtons) capables de recevoir les pinces. Cette chaîne est entraînée en mouvement par exemple par des roues motorisées. Un système d'accrochage tel que décrit dans la présente invention assure le passage de chacune des pinces de la broche de stockage vers un têton libre de la chaîne. Arrivée à destination, la pince peut être éjectée du têton qui la porte au moyen d'un système de décrochage selon l'invention. S'il y a un changement de niveau entre le point de départ et celui d'arrivée, les pinces et les objets sont soumis à l'action d'un système de tuilage selon l'invention qui assure le chevauchement les uns sur les autres des objets durant ce changement de niveau.

Les installations de manutention de ce type peuvent se retrouver dans un grand nombres d'applications telles que par exemple le tri des pochettes d'expéditions des travaux photographiques, le tri de documents, d'objets divers, ou pour des regroupements d'objets...

## Revendications

1. Pince (1) de maintien d'objet constituant un élément assurant la liaison entre cet objet et un support et comportant une ouverture (4) à travers laquelle le support est introduit, caractérisée en ce que cette ouverture (4) se termine par une fente (6) débouchant sur la périphérie de la pince (1), et présente un profil délimitant d'une part, une surface de grandeur croissante depuis la fente (6) jusqu'à la base (AB) de l'ouverture (4), autorisant ainsi l'introduction "à la volée" du support, conduisant d'autre part à une configuration des parois de cette ouver-ture (4) favorable au glissement de ce support après son introduction et jusqu'à ce qu'un état d'équilibre s'établisse; cette pince (1) étant réalisée en un matériau présentant une élasticité capable de créer un effet de ressort tendant à ramener dans un même plan les deux parties (P$_1$ et P$_2$) de la pince (1), situées de part et d'autre de la fente 6 quelles que soient les contraintes auxquelles elles sont soumises et présentant, aussi, un coefficient de frottement accentuant le glissement du support après son introduction.

2. Pince (1) de maintien selon la revendication 1, caractérisée en ce que cette ouverture (4) a un profil en triangle dont la base est AB, le sommet coïncide avec la fente (6) et les côtés forment les parois de cette ouverture (4).

3. Pince (1) de maintien selon l'une des revendications 1 et 2, caractérisée en ce qu'elle comporte en outre au moins un bossage (10) capable de servir d'entretoise dans le cas où une succession de pinces est utilisée et où une distance déterminée doit être respectée entre chaque pince.

4. Système d'accrochage d'une pince (1) de maintien d'objet selon l'une des revendications 1 à 3 destiné à assurer le passage de la pince d'un premier support fixe (15) sur lequel elle se trouve, sur un second support mobile (30), caractérisé en ce qu'il comprend:
— un répartiteur chargé de présenter une seule pince à la fois coopérant avec

— un dispositif d'accrochage proprement dit constitué d'un organe de poussée plaquant cette pince seule au voisinage des bords de la fente contre un jeu de deux butées (H et G) situées dans un plan vertical, faisant avec l'axe du premier support un angle inférieur à 90°, la butée H étant plus courte que la butée G, cet organe de poussée coopérant lui-même d'une part avec des moyens de positionnement du second support (30) de manière à ce qu'il pénètre dans l'ouverture (4) de la pince lorsque celle-ci se trouve déjà en appui sur les butées (H et G); d'autre part, avec une butée (J) destinée à maintenir la pince dans une position verticale durant le passage de cette pince du premier support sur le second.

5. Système d'accrochage selon la revendication 4, caractérisé en ce que le répartiteur comprend une première et une seconde guillotine (21 et 20) agencées de telle manière que la première pince vienne en butée sur la seconde guillotine (20), la première guillotine étant relevée, et que cette première guillotine s'abaisse entre la première et la seconde pince qui la suit pour retenir cette seconde pince tandis que la seconde guillotine se relève pour libérer la première pince.

6. Système d'accrochage selon la revendication 4, caractérisé en ce que le répartiteur comprend: une première broche trés inclinée (15), terminée par une seconde broche (150) de plus petit diamètre, de longueur comprise entre une et deux fois l'épaisseur de ladite pince et de même inclinaison que la première broche; une troisième broche (151) moins inclinée que les deux premières, placée immédiatement sous les deux autres; un volet (152) mobile selon un mouvement alternatif rapide, placé dans un premier temps, en position basse pour maintenir la première pince qui est sur le point de passer du premier sur le second support, puis dans un second temps en position haute libérant ainsi la première pince tandis qu'une seconde pince qui suit tombe sur la deuxième broche, et enfin dans un troisième temps, à nouveau en position basse assez rapidement pour retenir la seconde pince, tandis que la première pince est alors prise en charge par le dispositif d'accrochage.

7. Système d'accrochage selon l'une des revendications 4 à 6, caractérisé en ce que l'organe de poussée est constitué par deux roues à rochets (25) et (26) de diamètre différent, ayant le même nombre de dents, calées sur un même axe incliné par rapport à la trajectoire suivie par le second support mobile et aussi par rapport à l'axe du premier support, le profil des dents contribuant à ladite prise en charge.

8. Système d'accrochage selon la revendication 5, caractérisé en ce que l'organe de poussée est constitué par la seconde guillotine (200) dudit répartiteur présentant une structure en double coin.

9. Système d'accrochage selon la revendication 6, caractérisé en ce que l'organe de poussée est constitué par une fourchette rotative (80) dont les mouvements sont synchronisés avec ceux du répartiteur.

10. Système de décrochage d'une pince de maintien d'objet conforme à l'une des revendications 1 à 3, destiné à assurer le passage de la pince d'un second support mobile (30) sur lequel elle se trouve, sur une première broche réceptrice (15), caractérisé en ce qu'il comprend une came (70) présentant la configuration d'une fourchette, actionnée de telle sorte que lorsque la came est maintenue en position fixe chaque pince glisse sur une pente rectiligne de celle-ci et qu'au moment où la broche réceptrice (15) se trouve en face de l'ouverture triangulaire de la pince, une partie curviligne de la came (70) termine brusquement le mouvement de décrochage.

11. Système de tuilage d'une pince de maintien d'objet conforme à l'une des revendications 1 à 3, destiné à assurer le chevauchement d'au moins une pince sur une autre pince portée par un support mobile, caractérisé en ce qu'il est constitué par une came concentrique (90) à la trajectoire du support mobile (30) et présentant un profil capable de faire pivoter la pince suivant un axe vertical de manière à lui imprimer une légère rotation sur le support mobile.

12. Installation de manutention, caractérisée en ce qu'elle met en oeuvre au moins une pince selon l'une des revendications 1 à 3.

**Claims**

1. Article-retention clamp (1) constituting an element for establishing a connection between an article and a support, comprising an opening (4) through which the support is introduced, characterized in that the opening (4) terminates in a slot (6) opening at the edge of the clamp (1) and has a form which on the one hand defines a surface of size increasing from the slot (6) to the base (AB) of the opening (4) and thus permitting the introduction of the support "in motion" and on the other hand provides a configuration of the edges of the opening (4) which is favorable to the sliding of the support after the introduction thereof until establishment of an equilibrium condition, and that the clamp (1) is formed from a material which has an elasticity which produces a spring effect for returning the two parts ($P_1$, $P_2$) of the clamp (1) disposed on either side of the slot (6) into a plane whatever the stresses to which they are subjected are, and which has a coefficient of friction which promotes the sliding of the support after the introduction thereof.

2. Clamp (1) according to claim 1, characterized in that the opening has the form of a triangle with the base AB whose apex coincides with the slot (6) and whose sides form the edges of the opening (4).

3. Clamp (1) according to any one of claims 1 and 2, characterized in that it comprises inter alia at least one boss (10) which can serve as spacer in the case in which a succession of clamps is used and a predetermined distance is to be maintained between the clamps.

4. Hanging system for an article-retention clamp (1) according to any one of claims 1 to 3 for transferring the clamp from a first fixed support (15) on which it is disposed to a second mobile support (30), characterized by
— a separating means for offering only one clamp for cooperation with
— a hanging means proper comprising an advancing member which applies the clamp only in the vicinity of the edges of the slot against a set of two stops (H and G) which are arranged in a vertical plane which forms with the axis of the first support an angle which is less than 90°, the stop (H) being shorter than the stop (G) and the advancing member cooperating on the one hand with means which bring the second support (30) into a position such that it penetrates into the opening (4) of the clamp when the latter is already in engagement with the stops (H and G) and on the other hand with a stop (J) which is intended to hold the clamp in a vertical position during its transfer from the first support to the second support.

5. Hanging system according to claim 4, characterized in that the separating means includes a first and a second blade (21 and 20) which are so disposed that the first clamp when the first blade is raised comes into engagement with the second blade (20) and the first blade descends between the first clamp and the second clamp is following the first so that the second clamp is retained whilst the second blade is raised to release the first clamp.

6. Hanging system according to claim 4, characterized in that the separating means includes the following: a first highly inclined pin (15) which terminates in a second mandrel (150) of smaller diameter, the length of which is between one and two times the thickness of the clamp and which has the same inclination as the first mandrel, a third mandrel (151) disposed immediately beneath the two other mandrels and being inclined less than the two first mentioned mandrels, a flap (152) which is rapidly moveable in reverse directions and which assumes at a first instant a low position in which it holds the first clamp which is at transfer point from the first support to the second, and then assumes at a second instant a high position in which it releases the first clamp whilst a following second clamp drops onto the second mandrel, and finally at a third instant assumes again fairly rapidly a low position in which it holds the second clamp whilst the first clamp is taken over by the hanging means.

7. Hanging system according to any one of claims 4 to 6, characterized in that the advancing member is formed by two toothed wheels (25) and (26) which are of different diameter and have the same number of teeth and which are mounted on the same axis which is inclined with respect to the path traversed by the second moving support and also with respect to the axis of the first support, the profile of the teeth promoting the transfer.

8. Hanging system according to claim 5, characterized in that the advancing member is formed by the second blade (200) of the separating means, which has the form of a double wedge.

9. Hanging system according to claim 6, characterized in that the advancing member is formed by a rotatable fork (80) whose movements are synchronized with the movements of the separating means.

10. Removing system for an article-retention clamp according to any one of claims 1 to 3 for transferring the clamp from a moving second support (30) on which it is disposed to a first receiving mandrel (15), characterized by a cam (70) which has the form of a fork and is so actuated that when it is held in a fixed position each clamp slides on a rectilinear inclined face of the cam and when the receiving mandrel (15) is disposed in front of the triangular opening of the clamp a curved portion of the cam (70) abruptly terminates the removing movement.

11. System for overlapping article-retention clamps according to any one of claims 1 to 3 for obtaining overlapping of at least one clamp with another clamp held by a moving support, characterized by a cam (90) which extends concentrically to the path of the moving support (30) and has a profile adapted to pivot the clamp about a vertical axis so that a slight rotation is imparted thereto on the moving support.

12. Handling system, characterized in that it utilizes at least one clamp according to any one of claims 1 to 3.

## Patentansprüche

1. Objekthalteklemme (1), die ein Element zum Herstellen einer Verbindung zwischen einem Objekt und einem Träger bildet, mit einer Öffnung (4), durch die der Träger eingeführt wird, dadurch gekennzeichnet, daß die Öffnung (4) mit einem am Rand der Klemme (1) mündenden Schlitz (6) endet und eine Form hat, die einerseits eine Fläche mit vom Schlitz (6) bis zur Basis (AB) der Öffnung (4) zunehmender Größe umgrenzt und so das Einführen des Trägers "in Bewegung" erlaubt, und andererseits einen Verlauf der Ränder der Öffnung (4) ergibt, der für das Gleiten des Trägers nach dessen Einführung bis zur Einstellung eines Gleichgewichtszustandes günstig ist, und daß die Klemme (1) aus einem Material gebildet ist, das eine Elastizität aufweist, die eine Federwirkung zur Rückführung der zwei beiderseits des Schlitzes (6) befindlichen Teile ($P_1$, $P_2$) der Klemme (1) in eine Ebene erzeugt, wie die Beanspruchungen, denen sie ausgesetzt sind, auch sein mögen, und das einen Reibungskoeffizienten hat, der das Gleiten des Trägers nach seiner Einführung fördert.

2. Klemme (1) nach Anspruch 1, dadurch gekennzeichnet, daß die Öffnung die Form eines Dreiecks mit der Basis AB hat, dessen Scheitelpunkt mit dem Schlitz (6) zusammenfällt und dessen Seiten die Ränder der Öffnung (4) bilden.

3. Klemme (1) nach einem der Ansprüche 1 und 2, dadurch gekennzeichnet, daß sie unter anderem wenigstens einen Höcker (10) aufweist, der als Abstandsstück in dem Fall dienen kann, daß eine Aufeinanderfolge von Klemmen angewendet wird und daß ein verbestimmter Abstand zwischen den Klemmen aufrechterhalten werden soll.

4. Aufhängesystem für eine Objekthalteklemme (1) nach einem der Ansprüche 1 bis 3 zum Überführen der Klemme von einem ersten, festen Träger (15), auf dem sie sich befindet, auf einen zweiten, beweglichen Träger (30), gekennzeichnet durch
— eine Aufteilvorrichtung zum Anbieten jeweils nur einer Klemme für die Zusammenarbeit mit
— einer eigentlichen Aufhängevorrichtung, bestehend aus einem Vorschuborgan, das diese Klemme nur in der Nähe der Ränder des Schlitzes an eine Gruppe von zwei Anschlägen (H und G) anlegt, die in einer Vertikalebene angebracht sind, die mit der Achse des ersten Trägers einen Winkel bildet, der kleiner als 90° ist, wobei der Anschlag (H) kürzer als der Anschlag (G) ist und das Vorschuborgan einerseits mit Mitteln zusammenwirkt, die den zweiten Träger (30) in eine solche Lage bringen, daß er in die Öffnung (4) der Klemme eindringt, wenn sich diese bereits in Anlage an den Anschlägen (H und G) befindet, und andererseits mit einem Anschlag (J), der dazu bestimmt ist, die Klemme während ihres Übergangs vom ersten Träger auf den zweiten Träger in einer vertikalen Lage zu halten.

5. Aufhängesystem nach Anspruch 4, dadurch gekennzeichnet, daß die Aufteilvorrichtung ein erstes und ein zweites Messer (21 und 20) enthält, die so angeordnet sind, daß die erste Klemme bei angehobenem ersten Messer in Anlage an das zweite Messer (20) kommt, und daß sich das erste Messer zwischen die erste Klemme und die zweite Klemme, die dieser folgt, absenkt, damit die zweite Klemme zurückgehalten wird, während sich das zweite Messer zur Freigabe der ersten Klemme anhebt.

6. Aufhängesystem nach Anspruch 4, dadurch gekennzeichnet, daß die Aufteilvorrichtung folgendes enthält: einen ersten, stark geneigten Dorn (15) der mit einem zweiten Dorn (150) mit kleinerem Durchmesser endet, dessen Länge zwischen der einfachen und der doppelten Dicke der Klemme liegt und der die gleiche Neigung wie der erste Dorn aufweist, einen unmittelbar unter den zwei anderen Dornen angeordneten dritten Dorn (151), der weniger als die zwei zuerst genannten Dorne geneigt ist, eine Klappe (152), die in umgekehrten Richtungen schnell beweglich ist und die an einem ersten Zeipunkt eine tiefe Position einnimmt, in der sie die erste Klemme hält, die sich am Übergangspunkt vom ersten Träger zum zweiten Träger befindet, dann an einem zweiten Zeitpunkt eine hohe Position einnimmt, in der sie die erste Klemme freigibt, während eine nachfolgende zweite Klemme auf den zweiten Dorn fällt, und schließlich an einem dritten Zeitpunkt ziemlich schnell wieder eine tiefe Position einnimmt, in der sie die zweite Klemme festhält, während die erste Klemme von der Aufhängevorrichtung übernommen ist.

7. Aufhängesystem nach einem der Ansprüche 4 bis 6, dadurch gekennzeichnet, daß das Vorschuborgan von zwei Zahnrädern (25) und (26) gebildet ist, die unterschiedliche Durchmesser und die gleiche Anzahl von Zähnen aufweisen und die auf der gleichen Achse befestigt sind, die bezüglich der vom zweiten beweglichen Träger durchlaufenen Bahn und auch bezüglich der Achse des ersten Trägers geneigt ist, wobei das Profil der Zähne zu der Übernahme beiträgt.

8. Aufhängesystem nach Anspruch 5, dadurch gekennzeichnet, daß das Vorschuborgan von dem zweiten Messer (200) der Aufteilvorrichtung gebildet ist, das die Form eines Doppelkeils aufweist.

9. Aufhängesystem nach Anspruch 6, dadurch gekennzeichnet, daß das Vorschuborgan von einer drehbaren Gabel (80) gebildet ist, deren Bewegungen mit den Bewegungen der Aufteilvorrichtung synchronisiert sind.

10. Abhängesystem für eine Objekthalteklemme nach einem der Ansprüche 1 bis 3 zum Überführen der Klemme von einem beweglichen zweiten Träger (30), auf dem sie sich befindet, auf einen ersten Aufnahmedorn (15), gekennzeichnet durch ein Kurvenstück (70), das die Form einer Gabel hat und so betätigt wird, daß dann, wenn es in einer festen Position gehalten ist, jede Klemme auf einer geradlinigen Schrägfläche des Kurvenstücks gleitet, und dann, wenn sich der Aufnahmedorn (15) vor der dreieckigen Öffnung der Klemme befindet, ein gekrümmter Abschnitt des Kurvenstücks (70) die Abhängebewegung schlagartig beendet.

11. System zum Überinanderschichten von Objekthalteklemmen nach einem der Ansprüche 1 bis 3 zur Erzielung einer Überlappung von wenigstens einer Klemme mit einer anderen, von einem beweglichen Träger gehaltenen Klemme, gekennzeichnet durch ein konzentrisch zur Bahn des beweglichen Trägers (30) verlaufendes Kurvenstück (90) mit einem Profil, das geeignet ist, die Klemme um eine vertikale Achse so zu schwenken, daß ihr am beweglichen Träger eine leichte Drehung erteilt wird.

12. Handhabungsanlage, dadurch gekennzeichnet, daß sie von wenigstens einer Klemme gemäß einem der Ansprüche 1 bis 3 Gebrauch macht.

0 000 451

Fig_1

Fig_2

Fig_3

Fig_4

Fig_5

Fig_6

# Fig_7

J

H

G

25

D

D

22

15

# Fig_8

27

25

30

26

20

15

21

## Fig_9

153

152

25

150

15

J

H

G

151

Fig_10

Fig_11

Fig_12

# Fig_13

# Fig_14

# Fig_15

Fig_16

## Fig _17

## Fig _18

## Fig _19

# Fig_20

30

90

c

b

a

$c_1$

$b_1$

$a_1$

# Fig_21

90

30

95

# Fig 22

95

30

$a_1$ a

b

$b_1$ $c_1$

c